# EUROPEAN PATENT SPECIFICATION

(11) **EP 2 757 835 B1**
(45) Date of publication and mention of the grant of the patent: **29.06.2016**
(21) Application number: 14150440.7
(22) Date of filing: 08.01.2014
(51) Int. Cl.: H04W 48/18, H04W 8/12, H04W 8/18

(54) **Method of automatic SIM card selection according to network environment**
Verfahren zur automatischen SIM-Karten-Auswahl gemäß der Netzwerkumgebung
Procédé de sélection de carte SIM automatique selon un environnement de réseau

(30) Priority: 17.01.2013 US 201361753443 P; 18.06.2013 US 201313920090
(43) Date of publication of application: 23.07.2014
(73) Proprietor: Acer Incorporated, New Taipei City 221 (TW)
(72) Inventor: Cheng, Tsung-Yo, New Taipei City 221 (TW)
(74) Representative: Becker Kurig Straus

(56) References cited:
- EP-A1- 2 544 477
- CN-A- 102 300 193
- US-A1- 2002 154 632
- "3rd Generation Partnership Project; Technical Specification Group Core Network and Terminals; Non-Access-Stratum (NAS) functions related to Mobile Station (MS) in idle mode (Release 11)", 3GPP STANDARD; 3GPP TS 23.122, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V11.4.0, 19 December 2012 (2012-12-19), pages 1-45, XP050691245, [retrieved on 2012-12-19]

## Description

### Field of the Invention

The present invention is related to a method of automatic SIM card selection on a multi-SIM user equipment based on network environment.

### Background of the Invention

A dual-SIM mobile phone is a cell phone capable of equipping two subscriber identity module (SIM) cards, which correspond to different phone numbers. The dual-SIM mobile phone with two radio transceivers allows a user to access two cellular networks for communication services without having to carry two phones. Two wireless communication bearers, either in a circuit-switched domain or a packet-switched domain, may be established between the dual-SIM mobile phone and network controllers at the same time. For example, the same mobile phone may be used for both business and private use with separate numbers and billings, thus providing convenience to mobile phone users.

Traditional voice calls are routed over circuit-switched networks operated by service providers. A mobile phone that has roaming privileges can roam into any network. Roaming calls are routed from the current visiting location of the mobile phone to any number in the world. However, additional fees are usually applied to calls made and/or received while the phone is roaming. With the imposition of such roaming fees, the cost of calls when a wireless device is roaming is typically considerably higher than for calls when the device is in its home area.

Dual-SIM mobile phone users are often required to manually switch between SIM cards. In addition to inconvenient user experiences, unnecessary roaming charges may be generated due to wrong judgment of the user. Therefore, there exists a need for reducing the roaming cost in multi-SIM mobile devices.

European Patent Application No. 2544477 A1 teaches a method and apparatus for selecting one of multiple identity modules attached to a mobile terminal. The method includes selecting a network, detecting identity modules corresponding to the network, selecting one of the detected identity modules, and connecting to the network using the selected identity module. The identity module selection method enables automatic selection of one of multiple identity modules attached to a mobile terminal without cumbersome user manipulation.

US Patent Application No. 2002/154632 A1 teaches a method for switching between multiple SIM cards within a telephone. The method comprises the steps of storing a plurality of internal ID codes, each of which identifies a direct service provider of one of the SIM cards, receiving an ID code identifying one of the service providers, comparing the received ID code to each of the internal ID codes, and switching to one of the SIM cards when the service provider identified by the received ID code is recognized as the direct one of the SIM card switched to, identified by the corresponding internal ID code.

### Summary of the Invention

The present invention aims at providing a method of automatic SIM card selection on a user equipment (UE) according to network environment which can therefore reduce roaming costs.

This is achieved by a method of automatic SIM card selection according to claim 1 and a UE according to claim 10. The dependent claims pertain to corresponding further developments and improvements.

Dual-SIM mobile phone users are often required to manually switch between SIM cards. In addition to inconvenient user experiences, unnecessary roaming charges may be generated due to wrong judgment of the user. Therefore, there exists a need for reducing the roaming cost in multi-SIM mobile devices.

### Summary of the Invention

The present invention aims at providing a method of automatic SIM card selection on a user equipment (UE) according to network environment which can therefore reduce roaming costs.

This is achieved by a method of automatic SIM card selection according to claim 1 and a UE according to claim 10. The dependent claims pertain to corresponding further developments and improvements.

As will be seen more clearly from the detailed description following below, the claimed method of automatic SIM card selection on a UE according to network environment when or after the UE leaves a first communication range and enters a second communication range, the UE including a plurality of SIM cards and wherein one of the plurality of SIM cards is set as a primary SIM card, includes the steps of scanning the second communication range using a first radio access technology (RAT) for acquiring a first public land mobile network (PLMN)-identification of a first PLMN; setting a first SIM card of the UE as the primary SIM card and camping on the first PLMN using the first RAT if identity information of the first SIM card matches the PLMN-identification of the first PLMN; scanning the second communication range using a second RAT for acquiring a second PLMN-identification of a second PLMN if identity information of all SIM cards of the UE do not match the PLMN-identification of the first PLMN; and setting a second SIM card of the UE as the primary SIM card and camping on the second PLMN using the second RAT if identity information of the second SIM card matches the second PLMN-identification of the second PLMN.

As will be seen more clearly from the detailed description following below, the claimed UE includes two or more SIM cards and a memory device which stores software capable of carrying a method of automatic SIM card selection according to network environment.

### Brief Description of the Drawings

In the following, the invention is further illustrated by way of example, taking reference to the accompanying drawings.

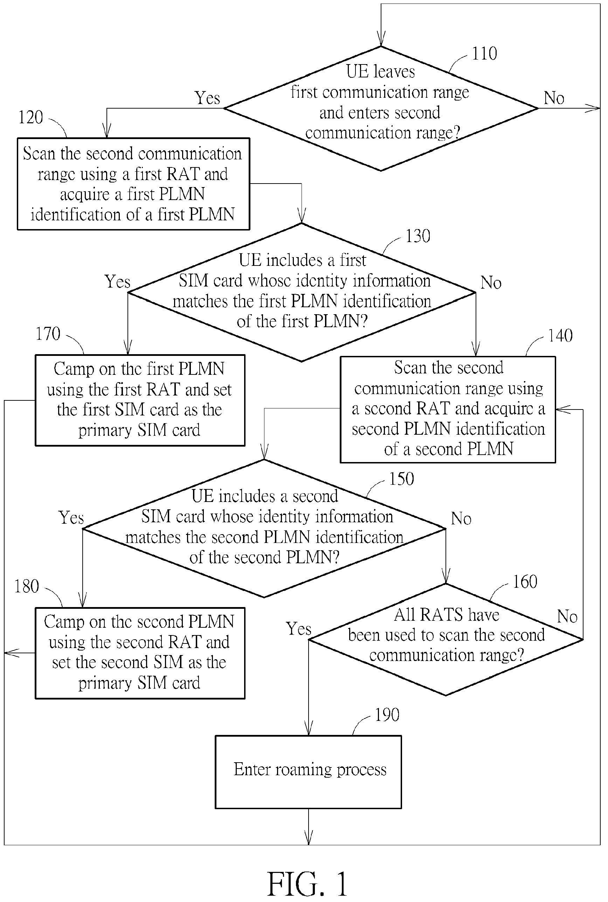

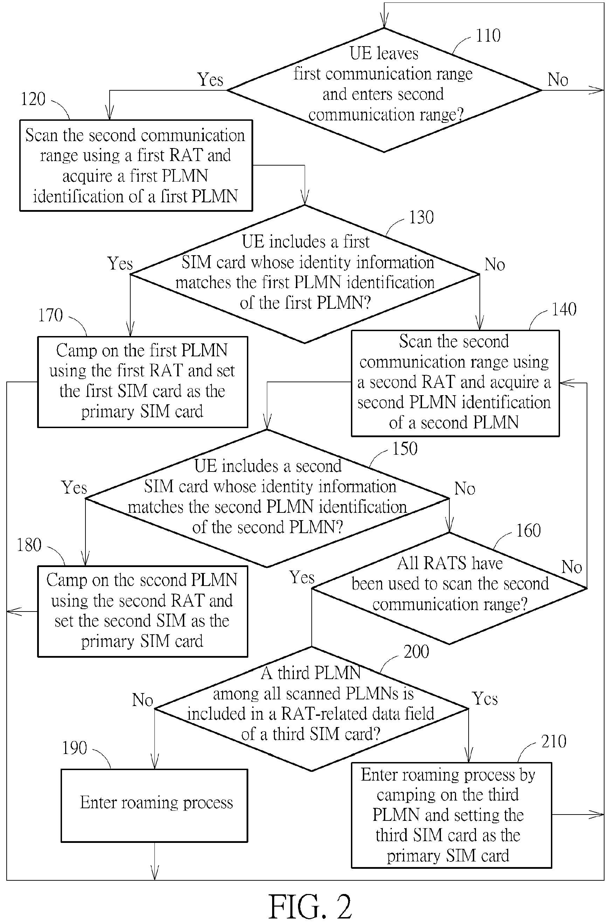

FIGs. 1 and 2 are flowcharts illustrating a method of automatic SIM card selection on a user equipment according to embodiments of the present invention.

### Detailed Description

The present invention provides a method of automatic SIM card selection on a user equipment (UE) according to network environment. The UE may be a dual-SIM or multi-SIM electronic device capable of containing multiple types of SIM cards, such as a SIM card for global system for mobile communications (GSM) network, a universal SIM (USIM) card for universal mobile telecommunications system (UMTS) network, or a removable user identity module (R-UIM) and a code division multiple access (CDMA) subscriber identity module (CSIM) card for CDMA network. The GSM SIM card typically contains user account information, an international mobile subscriber identity (IMSI) and a set of SIM application toolkit (SAT) commands and provides storage space for phone book contacts. The USIM card typically contains user account information, an IMSI, authentication information and a set of USIM Application Toolkit (USAT) commands and provides storage space for text messages and phone book contacts. The R-UIM or the CSIM card is physically compatible with the GSM SIM card, and provides similar security mechanisms for the CDMA system.

The technical specification 3GPP TS 31.102 prepared by the group of 3rd Generation Partnership Project (3GPP) proposes a priority configuration of a radio access technology (RAT) in which one or more RATs are made associated with one public land mobile network (PLMN). According to this, a UE grants a priority to the RAT that has the highest priority to search for a network present in the environment every time it loses network coverage. A communication company or a subscriber can set a priority level in the SIM card. A PLMN associated with a RAT set by the communication company is specified by an operator PLMN (OPLMN), and a PLMN associated with a RAT set by the user is specified by a user PLMN (UPLMN). Priority setting is stored in each SIM card of the UE.

FIG. 1 is a flowchart illustrating a method of automatic SIM card selection on a UE according to an embodiment of the present invention. FIG. 1 includes the following steps:
- Step 110:: determine if the UE leaves a first communication range and enters a second communication range; if yes, execute step 120; if no, execute step 110.
- Step 120:: scan the second communication range using a first RAT and acquire a first PLMN identification of a first PLMN, execute step 130.
- Step 130:: determine if the UE includes a first SIM card whose identity information matches the first PLMN identification of the first PLMN; if yes, execute step 170; if no, execute step 140.
- Step 140:: scan the second communication range using a second RAT and acquire a second PLMN identification of a second PLMN; execute step 150.
- Step 150:: determine if the UE includes a second SIM card whose identity information matches the second PLMN identification of the second PLMN; if yes, execute step 180; if no, execute step 160.
- Step 160:: determine if all RATS indicated by the priority setting of each SIM card have been used to scan the second communication range; if yes, execute step 190; if no, execute step 140.
- Step 170:: camp on the first PLMN using the first RAT and set the first SIM card as the primary SIM card; execute step 110.
- Step 180:: camp on the second PLMN using the second RAT and set the second SIM as the primary SIM card; execute step 110.
- Step 190:: enter roaming process; execute step 110.

Before step 110, the UE may be camping on a network PLMN which may be a home PLMN (HPLMN), an equivalent home PLMN (HPLMN) or a visited home PLMN (VPLMN) selected by the UE when operating in an automatic mode or a manual mode, as described in the technical specification 3GPP TS. 23.122.

In step 110, it is determined if the UE leaves the first communication range and enters the second communication range. The first and second communication ranges may be different location areas (LA), different routing areas (RA) or different countries.

In step 120, the UE is configured to scan the second communication range using the first RAT, which may have the highest priority according to the priority setting of the current primary SIM card of the UE. The first PLMN identification may include a mobile country code (MCC) and a mobile network code (MNC), which together uniquely identify the first PLMN in the second communication range.

In Step 130, the UE is configured to compare the identity information (such as IMSI) of each SIM card with the first PLMN identification of the first PLMN. If the first SIM card is a match, step 170 is then executed for camping on the first PLMN using the first RAT. The first SIM card is then automatically set as the primary SIM card before the UE leaves the second communication range. Therefore, a local charge may be enjoyed, and generating a roaming charge may be avoided.

In step 140, the UE is configured to scan the second communication range using the second RAT if the UE does not include any SIM card whose identity information (such as IMSI) matches the first PLMN identification of the first PLMN in step 130. The second RAT may be an unused RAT indicated by any of the SIM cards, such as the one having the second highest priority according to the priority setting of the current primary SIM card, or the one having the highest priority according to the priority setting of another SIM card. The second PLMN identification may include an MCC and an MNC, which together uniquely identify the second PLMN in the second communication range.

In Step 150, the UE is configured to compare the identity information (such as IMSI) of each SIM card with the second PLMN identification of the second PLMN. If the second SIM card is a match, step 180 is then executed for camping on the second PLMN using the second RAT. The second SIM card is then automatically set as the primary SIM card before the UE leaves the second communication range. Therefore, a local charge may be enjoyed, and generating a roaming charge may be avoided.

In step 160, the UE is configured to scan the second communication range using all available RATs before finding a match between a SIM IMSL and a network PLMN. If no match can be found after using all RATS indicated by the priority setting of each SIM card, step 190 is then executed for entering roaming process. The UE may set any of its SIM card as the primary SIM card randomly, according to a predetermined rule, or based on user selection.

FIG. 2 is a flowchart illustrating a method of automatic SIM card selection on a UE according to another embodiment of the present invention. FIG. 2 includes the following steps:
- Step 110:: determine if the UE leaves a first communication range and enters a second communication range; if yes, execute step 120; if no, execute step 110.
- Step 120:: scan the second communication range using a first RAT and acquire a first PLMN identification of a first PLMN, execute step 130.
- Step 130:: determine if the UE includes a first SIM card whose identity information matches the first PLMN identification of the first PLMN; if yes, execute step 170; if no, execute step 140.
- Step 140:: scan the second communication range using another RAT and acquire a second PLMN identification of a second PLMN; execute step 150.
- Step 150:: determine if the UE includes a second SIM card whose identity information matches the second PLMN identification of the second PLMN; if yes, execute step 180; if no, execute step 160.
- Step 160:: determine if all RATS indicated by the priority setting of each SIM card have been used to scan the second communication range; if yes, execute step 200; if no, execute step 140.
- Step 170:: camp on the first PLMN using the first RAT and set the first SIM card as the primary SIM card; execute step 110.
- Step 180:: camp on the second PLMN using the first RAT and set the first SIM as the primary SIM card; execute step 110.
- Step 190:: enter roaming process; execute step 110.
- Step 200:: determine if a third PLMN among all scanned PLMNs is included in a RAT-related data field of a third SIM card; if yes, execute step 210; if no, execute step 190.
- Step 210:: enter roaming process by camping on the third PLMN and setting the third SIM card as the primary SIM card; execute step 110.

In the embodiment illustrated in FIG. 2, steps 110-190 may be executed in the same manner as FIG. 1. FIG. 2 further includes steps 200 and 210. If no match can be found after using all RATS indicated by the priority setting of each SIM card in step 160, step 200 is then executed in the embodiment illustrated in FIG. 2.

In step 200, the UE is configured to verify if any of the scanned PLMNs has roaming agreement with the service provider of any of its SIM card. This can be done by reading a RAT-related data field as defined in the technical specification 3GPP TS. 23.122, such as "HPLMN Selector with Access Technology", "Operator Controlled PLMN Selector with Access Technology", "User Controlled PLMN Selector with Access Technology", or "Equivalent HPLMN". If the third PLMN is included in any of the RAT-related data field of the third SIM card, the service provider of the third PLMN is likely to have roaming agreement with the service provider of the third SIM card, thereby providing reduced roaming fees. Step 210 is then executed for entering roaming process by camping on the third PLMN and setting the third SIM card as the primary SIM. Therefore, even if a local charge can not be enjoyed, the present invention can still reduce roaming charge.

In the present invention, the first SIM card, the second SIM card, or the third SIM card refers to one of the SIM cards plugged inside the UE.

The present invention may be applied to any type of UE which includes two or more SIM cards and a memory device, such as a read-only memory (ROM). The memory device of the UE may store software for carrying out the methods of automatic SIM card selection depicted in FIGs. 1 and 2.

In the present invention, when the UE leaves its current communication range and enters a new communication range, one or more RATs are used to scan the new communication range and the identity information of each SIM card is compared with the PLMN identification of each scanned PLMN. If a match can be found, the matching SIM card is automatically set as the primary SIM in order to avoid roaming charge. If no match can be found but the service provider of a specific PLMN has roaming agreement with the service provider of a specific SIM card, the specific SIM card is automatically set as the primary SIM card in order to reduce roaming charge.

## Claims

1. A method of automatic subscriber identity module, SIM, card selection on a user equipment , UE, according to network environment when or after the UE leaves a first communication range and enters a second communication range, the UE including a plurality of SIM cards and wherein one of the plurality of SIM cards is set as a primary SIM card; the method **characterized in that** it comprises the steps of:
scanning the second communication range using a first radio access technology, RAT, for acquiring a first public land mobile network, PLMN, identification of a first PLMN;
setting a first SIM card of the UE as the primary SIM card and camping on the first PLMN using the first RAT if identity information of the first SIM card matches the PLMN-identification of the first PLMN;
scanning the second communication range using a second RAT for acquiring a second PLMN-identification of a second PLMN if identity information of all SIM cards of the UE do not match the PLMN-identification of the first PLMN; and
setting a second SIM card of the UE as the primary SIM card and camping on the second PLMN using the second RAT if identity information of the second SIM card matches the second PLMN-identification of the second PLMN.

2. The method of claim 1, **characterized in that** the second SIM card includes a priority setting associated with the second RAT.

3. The method of claim 1, **further characterized by** comprising the further steps of:
determining if the first PLMN is included in a RAT-related data field of the first SIM card or the second SIM card if the identity information of the first and second SIM cards does not match the PLMN-identification of the first and second PLMN's and
the UE entering a roaming process by:
camping on the first PLMN and setting the first SIM card as the primary SIM card if the first PLMN is included in the RAT-related data field of the first SIM card; or
camping on the first PLMN and setting the second SIM card as the primary SIM card if the first PLMN is included in the RAT-related data field of the second SIM card.

4. The method of claim 3, **characterized in that** the RAT-related data field of the first SIM card or the second SIM card is an "HPLMN Selector with Access Technology" data field, an "Operator Controlled PLMN Selector with Access Technology" data field, a "User Controlled PLMN Selector with Access Technology" data field or an "Equivalent HPLMN" data field according to a 3rd Generation Partnership Project technical specification TS. 23.122.

5. The method of claim 1, **further characterized by** comprising the further steps of:
determining if the second PLMN is included in a RAT-related data field of the first SIM card or the second SIM card if the identity information of the first and second SIM cards do not match the PLMN-identification of the first and second PLMN's; and
the UE entering a roaming process by:
camping on the second PLMN and setting the first SIM card as the primary SIM card if the second PLMN is included in the RAT-related data field of the first SIM card; or
camping on the second PLMN and setting the second SIM card as the primary SIM card if the second PLMN is included in the RAT-related data field of the second SIM card.

6. The method of claim 5, **characterized in that** the RAT-related data field of the first SIM card or the second SIM card is an "HPLMN Selector with Access Technology" data field, an "Operator Controlled PLMN Selector with Access Technology" data field, a "User Controlled PLMN Selector with Access Technology" data field or an "Equivalent HPLMN" data field according to a 3rd Generation Partnership Project technical specification TS. 23.122.

7. The method of claims 1-6, **characterized in that** the first and second communication ranges are different location areas, different routing areas or different countries.

8. The method of claims 1-6, **characterized in that:**
the first PLMN-identification includes a first mobile country code and a first mobile network code for uniquely identifying the first PLMN in the second communication range; and
the second PLMN-identification includes a second mobile country code and a second mobile network code for uniquely identifying the second PLMN in the second communication range.

9. The method of claim 1, **characterized in that** the identity information of the first or second SIM card is an international mobile subscriber identity.

10. A UE comprising two or more SIM cards and a memory device which stores software capable of carrying out the method according to any of claims 1-9.

## Patentansprüche

1. Verfahren zur automatischen Teilnehmer-Identitätsmodul-, SIM-, Kartenauswahl bei einem Benutzergerät, UE, gemäß einer Netzwerkumgebung, falls oder nachdem das UE einen ersten Kommunikationsbereich verlässt und in einen zweiten Kommunikationsbereich eintritt, wobei das UE mehrere SIM-Karten beinhaltet und wobei eine der mehreren SIM-Karten als eine primäre SIM-Karte festgelegt ist;
wobei das Verfahren **dadurch gekennzeichnet ist, dass** es die Schritte umfasst von:
Scannen des zweiten Kommunikationsbereichs, unter verwenden einer ersten Funkzugangstechnologie, RAT, zur Erlangung einer ersten öffentliches landgestütztes Mobilnetzwerk-, PLMN-, Identifikation eines ersten PLMN;
Festlegen einer ersten SIM-Karte des UE als die primäre SIM-Karte und Camping in dem ersten PLMN, unter verwenden der ersten RAT, falls die Identitätsinformation der ersten SIM-Karte zu der PLMN-Identifikation des ersten PLMN passt;
Scannen des zweiten Kommunikationsbereichs, unter verwenden einer zweiten RAT, zur Erlangung einer zweiten PLMN-Identifikation eines zweiten PLMN, falls die Identitätsinformation aller SIM-Karten des UE nicht zu der PLMN-Identifikation des ersten PLMN passen; und
Festlegen einer zweiten SIM-Karte des UE als die primäre SIM-Karte und Camping in dem zweiten PLMN, unter verwenden der zweiten RAT, falls die Identitätsinformation der zweiten SIM-Karte zu der PLMN-Identifikation des zweiten PLMN passt.

2. Verfahren nach Anspruch 1, **dadurch gekennzeichnet, dass** die zweite SIM-Karte eine Prioritätsfestlegung verbunden mit der zweiten RAT beinhaltet.

3. Verfahren nach Anspruch 1, weiter **gekennzeichnet durch** Umfassen der weiteren Schritte von:
Bestimmen, ob das erste PLMN in einem RAT-zugehörigen Datenfeld der ersten SIM-Karte oder der zweiten SIM-Karte beinhaltet ist, falls die Identitätsinformation der ersten und zweiten SIM-Karte nicht zu den PLMN-Identifikationen des ersten und zweiten PLMNs passen, und
Eintreten des UE in einen Roaming-Vorgang **durch**:
Camping in dem ersten PLMN und Festlegen der ersten SIM-Karte als die primäre SIM-Karte, falls das erste PLMN in dem RAT-zugehörigen Datenfeld der ersten SIM-Karte beinhaltet ist; oder
Camping in dem ersten PLMN und Festlegen der zweiten SIM-Karte als die primäre SIM-Karte, falls das erste PLMN in dem RAT-zugehörigen Datenfeld der zweiten SIM-Karte beinhaltet ist.

4. Verfahren nach Anspruch 3, **dadurch gekennzeichnet, dass** das RAT-zughörige Datenfeld der ersten SIM-Karte ein "HPLMN Selector with Access Technology"-Datenfeld, ein "Operator Controlled PLMN Selector with Access Technology"-Datenfeld, ein "User Controlled PLMN Selector with Access Technology"-Datenfeld oder ein "Equivalent HPLMN"-Datenfeld gemäß einer 3rd Generation Partnership Project technical specification TS. 23. 122 ist.

5. Verfahren nach Anspruch 1, weiter **gekennzeichnet durch** Umfassen der weiteren Schritte von:
Bestimmen, ob das zweite PLMN in einem RAT-zugehörigen Datenfeld der ersten SIM-Karte oder der zweiten SIM-Karte beinhaltet ist, falls die Identitätsinformation der ersten und zweiten SIM-Karte nicht zu den PLMN-Identifikationen des ersten und zweiten PLMNs passen, und
Eintreten des UE in einen Roaming-Vorgang **durch**:
Camping in dem zweiten PLMN und Festlegen der ersten SIM-Karte als die primäre SIM-Karte, falls das zweite PLMN in dem RAT-zugehörigen Datenfeld der ersten SIM-Karte beinhaltet ist; oder
Camping in dem zweiten PLMN und Festlegen der zweiten SIM-Karte als die primäre SIM-Karte, falls das zweite PLMN in dem RAT-zugehörigen Datenfeld der zweiten SIM-Karte beinhaltet ist.

6. Verfahren nach Anspruch 5 **dadurch gekennzeichnet, dass** das RAT-zugehörige Datenfeld der ersten SIM-Karte oder der zweiten SIM-Karte ein "HPLMN Selector with Access Technology"-Datenfeld, ein "Operator Controlled PLMN Selector with Access Technology"-Datenfeld, ein "User Controlled PLMN Selector with Access Technology"-Datenfeld oder ein "Equivalent HPLMN"-Datenfeld gemäß einer 3rd Generation Partnership Project technical specification TS. 23. 122 ist.

7. Verfahren nach einem der Ansprüche 1-6, **dadurch gekennzeichnet, dass** der erste und zweite Kommunikationsbereich unterschiedliche Ortsgebiete, unterschiedliche Routing-Gebiete oder unterschiedliche Länder sind.

8. Verfahren nach einem der Ansprüche 1-6, **dadurch gekennzeichnet, dass**:
die erste PLMN-Identifikation einen ersten Mobil-Länder-Code und einen ersten Mobilnetzwerkcode zum eindeutigen Identifizieren des ersten PLMN in dem zweiten Kommunikationsbereich enthält; und
die zweite PLMN-Identifikation einen zweiten Mobil-Länder-Code und einen zweiten Mobilnetzwerkcode zum eindeutigen Identifizieren des zweiten PLMN in dem zweiten Kommunikationsbereich enthält.

9. Verfahren nach Anspruch 1, **dadurch gekennzeichnet, dass** die Identitätsinformation der ersten oder zweiten SIM-Karte eine internationale Mobil-Teilnehmer-Identität ist.

10. UE umfassend zwei oder mehr SIM-Karten und eine Speichervorrichtung, welche Software fähig zum Ausführen des Verfahrens gemäß einem der Ansprüche 1-9 speichert.

## Revendications

1. Procédé de sélection automatique de carte de module d'identité d'abonné, SIM, sur un équipement utilisateur, UE, selon un environnement réseau lorsque ou après que l'UE quitte une première plage de communication et entre dans une seconde plage de communication, l'UE comprenant une pluralité de cartes SIM et dans lequel l'une parmi la pluralité de cartes SIM est définie comme carte SIM primaire ; le procédé **caractérisé en ce qu'**il comprend les étapes consistant à :
balayer la seconde plage de communication en utilisant une première technolo-gie d'accès radio, RAT, pour acquérir une identification d'un premier réseau mobile terrestre public, PLMN, d'un premier PLMN ;
définir une première carte SIM de l'UE en tant que carte SIM primaire et se mettre en attente sur le premier PLMN en utilisant la première RAT si les informations d'identité de la première carte SIM correspondent à l'identification de PLMN du premier PLMN ;
balayer la seconde plage de communication en utilisant une seconde RAT pour acquérir une seconde identification de PLMN d'un second PLMN si les informations d'identité de toutes les cartes SIM de l'UE ne correspondent pas à l'identification de PLMN du premier PLMN ; et
définir une seconde carte SIM de l'UE en tant que carte SIM primaire et se mettre en attente sur le premier PLMN en utilisant la seconde RAT si les informations d'identité de la seconde carte SIM correspondent à l'identification de PLMN du second PLMN ;

2. Procédé selon la revendication 1, **caractérisé en ce que** la seconde carte SIM comprend un réglage de priorité associé à la seconde RAT.

3. Procédé selon la revendication 1, **caractérisé en outre en ce qu'**il comprend les étapes supplémentaires suivantes :
déterminer si le premier PLMN est inclus dans un champ de données se rapportant à la RAT de la première carte SIM ou de la seconde carte SIM si les informations d'identité des première et seconde cartes SIM ne correspondent pas à l'identification de PLMN des premier et second PLMN et
l'UE pénétrant dans un processus d'itinérance en :
se mettant en attente sur le premier PLMN et en définissant la première carte SIM comme carte SIM primaire si le premier PLMN est inclus dans le champ de données se rapportant à la RAT de la première carte SIM ; ou
se mettant en attente sur le premier PLMN et en définissant la seconde carte SIM comme carte SIM primaire si le premier PLMN est inclus dans le champ de données se rapportant à la RAT de la seconde carte SIM.

4. Procédé selon la revendication 3, **caractérisé en ce que** le champ de données se rapportant à la RAT de la première carte SIM ou de la seconde carte SIM est un champ de données « sélecteur de HPLMN avec technologie d'accès », un champ de données « sélecteur de PLMN commandé par l'opérateur avec technologie d'accès », un champ de données « sélecteur de PLMN commandé par l'utilisateur avec technologie d'accès » ou un champ de données « HPLMN équivalent » selon la spécification technique TS. 23.122 du Projet de partenariat de 3^{e} génération (3GPP).

5. Procédé selon la revendication 1, **caractérisé en outre en ce qu'**il comprend les étapes supplémentaires suivantes :
déterminer si le second PLMN est inclus dans un champ de données se rapportant à la RAT de la première carte SIM ou de la seconde carte SIM si les informations d'identité des première et seconde cartes SIM ne correspondent pas à l'identification de PLMN des premier et second PLMN ; et
l'UE pénétrant dans un processus d'itinérance en :
se mettant en attente sur le second PLMN et en définissant la première carte SIM comme carte SIM primaire si le second PLMN est inclus dans le champ de données se rapportant à la RAT de la première carte SIM. ou
en se mettant en attente sur le second PLMN et en définissant la seconde carte SIM comme carte SIM primaire si le second PLMN est inclus dans le champ de données se rapportant à la RAT de la seconde carte SIM.

6. Procédé selon la revendication 5, **caractérisé en ce que** le champ de données se rapportant à la RAT de la première carte SIM ou de la seconde carte SIM est un champ de données « sélecteur de HPLMN avec technologie d'accès », un champ de données « sélecteur de PLMN commandé par l'opérateur avec technologie d'accès », un champ de données « sélecteur de PLMN commandé par l'utilisateur avec technologie d'accès » ou un champ de données « HPLMN équivalent » selon la spécification technique TS. 23.122 du Projet de partenariat de 3^{e} génération (3GPP).

7. Procédé selon les revendications 1 à 6, **caractérisé en ce que** les première et seconde plages de communication sont des zones de localisation différentes, des zones de routage différentes ou des pays différents.

8. Procédé selon les revendications 1 à 6, **caractérisé en ce que** :
la première identification de PLMN comprend un premier code mobile de pays et un premier code de réseau mobile permettant l'identification de façon unique du premier PLMN dans la seconde plage de communication ; et
la seconde identification de PLMN comprend un second code mobile de pays et un second code de réseau mobile permettant l'identification de façon unique du second PLMN dans la seconde plage de communication.

9. Procédé selon la revendication 1, **caractérisé en ce que** les informations d'identité de la première ou seconde carte SIM sont une identité internationale d'abonné mobile.

10. UE comprenant deux cartes SIM ou plus et un dispositif de mémoire qui stocke un logiciel capable d'effectuer le procédé selon l'une quelconque des revendications 1 à 9.
